# EUROPÄISCHE PATENTSCHRIFT

(11) **EP 2 762 239 B1**
(45) Veröffentlichungstag und Bekanntmachung des Hinweises auf die Patenterteilung: **04.01.2017**
(21) Anmeldenummer: 14152119.5
(22) Anmeldetag: 22.01.2014
(51) Int. Cl.: B05B 15/04, B05B 12/10, G05D 24/02

(54) **Farbauftragvorrichtung**
Device for applying paint
Dispositif d'application de peinture

(30) Priorität: 30.01.2013 DE 102013201487
(43) Veröffentlichungstag der Anmeldung: 06.08.2014
(73) Patentinhaber: Cefla Deutschland GmbH, 53340 Meckenheim (DE)
(72) Erfinder: Stahl, Gerhard, 53474 Bad Neuenahr-Ahrweiler (DE)
(74) Vertreter: dompatent von Kreisler Selting Werner - Partnerschaft von Patent- und Rechtsanwälten mbB

(56) Entgegenhaltungen:
- EP-A1- 0 618 015
- EP-A1- 2 368 642
- EP-A1- 2 529 845
- DE-A1- 19 741 096
- DE-A1-102010 030 280
- DE-T2- 68 924 872
- US-A- 2 848 353
- US-A- 4 574 005

## Beschreibung

Die Erfindung betrifft eine Farbauftragvorrichtung, insbesondere zum Auftragen wasserverdünnbarer Farben, wobei Farben jegliche Art von Oberflächenbeschichtung mit insbesondere wasserverdünnbaren Materialien umfasst. Beispielsweise zum Beschichten langgestreckter Werkstücke, wie Bretter und dgl., ist es bekannt, beispielsweise mit Hilfe von Beschichtungsköpfen oder Sprühköpfen Farben, Lacke oder dgl. auf die Oberflächen aufzubringen. Ein insbesondere zur Aufbringung wasserverdünnbarer Farben oder Beschichtungen geeigneter Sprühkopf ist beispielsweise in EP 2 253 384 A1 beschrieben.

Hierbei wird die Farbe in eine Kammer eingebracht, durch die das zu beschichtende Werkstück geführt wird. Überschüssiges Beschichtungsmaterial wird aus der insbesondere unter Unterdruck stehenden Kammer abgesaugt und einem Farbreservoir zugeführt. Aus dem Farbreservoir wird die Farbe über eine Pumpe oder dgl. wieder dem Sprühkopf zugeführt. Wenngleich es sich hierbei um einen im Wesentlichen geschlossenen Kreislauf handelt, kann nicht vermieden werden, dass ein Teil des in der Farbe vorhandenen Lösungsmittels, wie Wasser, verdunstet und sich hierdurch die Viskosität der Farbe verändert. Aufgrund dieser Erhöhung der Viskosität wird die Farbe zähflüssiger, so dass ein gleichmäßiges Versprühen der Farbe im Sprühkopf und somit insbesondere ein Auftragen dünner Farbschichten und/ oder exakter Auftragsmengen nicht mehr sicher gewährleistet ist. Auch können Verstopfungen des Sprühkopfs und dgl. auftreten. Es ist daher erforderlich, dass das verdunstete Lösungsmittel, wie Wasser, der Farbe wieder zugeführt wird. Hierzu ist es bekannt, dem Farbreservoir Lösungsmittel durch Öffnen eines Ventils zuzuführen. Dies ist auch bei hochviskosen Farben der Fall. Dies ist sehr aufwändig und insbesondere bei wasserverdünnbaren Farben schwierig, da das Wasser häufig an der Oberfläche der Farbe verbleibt und ein Einmischen bzw. Einrühren aufwändig ist.

Des weiteren ist aus US, die eine Farbauftragvorrichtung gemäß dem Oberbegriff vom Anspruch 1 offenbart, eine Farbauftragvorrichtung bekannt, die ein Farbreservoir aufweist, das über eine Zuführleitung mit einer Farbauftrageinrichtung verbunden ist. Zum Abführen überschüssiger Farbe ist eine Farbabführeinrichtung vorgesehen. Des weiteren ist eine Befeuchtungseinrichtung zum Erhöhen der Luftfeuchtigkeit im Bereich der Farbauftrageinrichtung und/oder in dem Farbreservoir sowie ein geeigneter Viskositätsmesser vorgesehen.

Aufgabe der Erfindung ist es, eine Farbauftragvorrichtung, die insbesondere für wasserverdünnbare Farben geeignet ist, zu schaffen, mit welcher auf einfache Weise die Viskosität einer Farbe verändert bzw. trotz Verdunstung aufrechterhalten werden kann. Ferner ist es Aufgabe der Erfindung, ein entsprechendes Verfahren zu schaffen.

Die Lösung der Aufgabe erfolgt erfindungsgemäß durch eine Vorrichtung gemäß Anspruch 1 bzw. ein Verfahren gemäß Anspruch 8.

Die erfindungsgemäße Farbauftragvorrichtung, die insbesondere zur Verarbeitung wasserverdünnbarer Farben, Lacke und Beschichtungsmittel geeignet ist, weist ein Farbreservoir auf. Das Farbreservoir ist über eine Zuführleitung mit einer Farbauftrageinrichtung, die beispielsweise einen Sprühkopf oder dgl. umfasst, verbunden. Geeignet sind hierbei Farbauftrageinrichtungen wie beispielsweise in EP 2 253 384 A1 beschrieben. Ferner ist eine Farbabführeinrichtung zum Abführen überschüssiger Farbe aus dem Bereich der Farbauftrageinrichtung in das Farbreservoir vorgesehen. Die Farbabführeinrichtung kann beispielsweise eine Pump- oder Saugeinrichtung umfassen, wobei insbesondere bei bevorzugter Verwendung einer Saugeinrichtung in einer Beschichtungskammer der Farbauftragseinrichtung Unterdruck erzeugt wird. Erfindungsgemäß ist ferner eine Befeuchtungseinrichtung zum Erhöhen der Luftfeuchtigkeit im Bereich der Farbauftrageinrichtung und/ oder in dem Farbreservoir vorgesehen. Durch eine derartige Befeuchtungseinrichtung wird beispielsweise Wasserdampf dem Farbkreislauf zugeführt. Selbstverständlich kann es sich auch um die Zufuhr eines anderen Lösungsmittels als Wasser in dampfförmiger Form handeln. Ein derartiges Zuführen von Lösungsmittel, wie Wasser, als Lösungsmitteldampf hat den Vorteil, dass es von der Farbe leichter aufgenommen wird, so dass hierdurch die Viskosität der Farbe auf einfache Weise aufrechterhalten oder verändert werden kann. Ein Einrühren des Lösungsmittels im Farbreservoir ist nicht erforderlich.

Dabei kann erfindungsgemäß die Befeuchtungseinrichtung im Bereich der Farbauftrageinrichtung vorgesehen sein. Handelt es sich bei der Farbauftrageinrichtung beispielsweise um eine Sprühpistole, so umfasst der Bereich, in dem die Befeuchtungseinrichtung vorgesehen ist, den Bereich, in dem der Sprühnebel durch die Sprühpistole erzeugt wird. Insbesondere ist hierdurch gewährleistet, dass der Lösungsmitteldampf ausreichend in den Sprühnebel eingebracht werden kann. Handelt es sich jedoch beispielsweise bei der Farbauftrageinrichtung um eine Beschichtungskammer, so ist die Befeuchtungseinrichtung innerhalb der Kammer angeordnet, vorzugweise jedoch in der Nähe der Sprühköpfe. In jedem Fall wird durch die Anordung der Befeuchtungseinrichtung im Bereich der Farbauftrageinrichtung gewährleistet, dass der eingebrachte Lösungsmitteldampf sich mit dem erzeugten Sprühnebel vermischt.

Bei der Farbauftrageinrichtung kann es sich beispielsweise auch um eine oder mehrere Sprühpistolen handeln, durch die wasserverdünnbare Farbe, Lack oder dgl. auf ein Werkstück aufgebracht wird. Hierbei kann als Farbabführeinrichtung anstelle eines Saugens oder Abpumpens auch ein Abfließen überschüssiger Farbe, beispielsweise über geneigte, ggf. gekühlte Platten, erfolgen. Auch kann es sich bei der Farbabführeinrichtung um eine Platte handeln, auf der sich die überschüssige Farbe abschlägt oder sammelt, wobei die Farbe von der Platte beispielsweise durch ein Wischerblatt oder dgl. entfernt wird. Auch bei einer derartigen Farbauftragseinrichtung sowie Farbabführeinrichtung ist erfindungsgemäß im Bereich der Farbauftragseinrichtung oder in einem Farbreservoir eine Befeuchtungseinrichtung zum Erhöhen der Luftfeuchtigkeit vorgesehen.

Durch die erfindungsgemäß ausgestaltete Farbauftragvorrichtung kann die Auftragsmenge der Farbe sehr exakt definiert bzw. eingestellt werden. Hierdurch können kurze Trockenzeiten bzw. kurze Trockenstrecken realisiert werden. Des Weiteren weist die erfindungsgemäße Farbauftragvorrichtung den erheblichen Vorteil auf, dass die Viskosität sehr genau gesteuert werden kann. Hierdurch ist es möglich, den Festkörperanteil in der Farbe bzw. dem Lack oder einem anderen Beschichtungsmittel zu erhöhen. Dies führt wiederum zu einer Verkürzung der Trockenzeiten bzw. der Trockenstrecken.

Um ein möglichst genaues Einstellen der zugeführten Menge oder Sättigung des Lösungsmitteldampfes steuern zu können, ist erfindungsgemäß ein Viskositätsmesser vorgesehen, wobei der Viskositätsmesser vorzugsweise in der Zuführleitung zu der Farbauftrageinrichtung angeordnet ist. In Abhängigkeit der gemessenen Viskosität kann über eine Steuereinrichtung die Befeuchtungseinrichtung und somit die Menge des zugeführten Lösungsmitteldampfes gesteuert werden.

In einer besonders bevorzugten Ausführungsform weist die erfindungsgemäße Farbauftragvorrichtung vorzugsweise eine Kühleinrichtung auf. Die Kühleinrichtung ist vorzugsweise in Förderrichtung der Farbauftragseinrichtung nachgeordnet. Durch die Kühleinrichtung erfolgt somit ein Kühlen des Gemisches aus durch die Befeuchtungseinrichtung eingebrachtem Lösungsmitteldampf und der aus der Auftragseinrichtung abgesaugten, überschüssigen Farbe. Besonders bevorzugt ist es hierbei, dass die Kühleinrichtung eine Fläche kühlt, an der das Gemisch aus überschüssiger Farbe und Lösungsmitteldampf kondensiert. Als Kühlfläche ist insbesondere eine Fläche in dem Farbreservoir, wie eine Wandfläche des Farbreservoirs, geeignet. Die vorzugsweise vorgesehene Steuereinrichtung steuert somit in besonders bevorzugter Ausführungsform in Abhängigkeit der durch den Viskositätsmesser gemessenen Viskosität sowohl die Befeuchtungseinrichtung als auch die Kühleinrichtung. Durch die Steuereinrichtung kann sowohl die Menge an zugeführtem Lösungsmitteldampf als auch die Temperatur der Kühlfläche gesteuert werden.

Gemäß des erfindungsgemäßen Verfahrens zur Viskositätseinstellung von insbesondere wasserverdünnbaren Farben und dgl. wird die Farbviskosität gemessen. In einem Bereich, in dem die Farbe auf ein Werkstück aufgetragen wird, erfolgt ein Zuführen von Lösungsmitteldampf. Alternativ oder zusätzlich kann ein Zuführen von Lösungsmitteldampf in dem Bereich erfolgen, in dem die Farbe bereitgestellt wird insbesondere das Farbreservoir. Vorzugsweise handelt es sich bei dem Lösungsmitteldampf um Wasserdampf, wobei auch Dampf eines anderen Lösungsmittels vorgesehen sein kann. Erfindungsgemäß erfolgt ein Einstellen eines Feuchtigkeitsgehalts über die Menge oder Sättigung des eingebrachten Lösungsmitteldampfes in Abhängigkeit der gemessenen Viskosität. Aufgrund des erfindungsgemäßen Zuführens von Lösungsmitteldampf kann die Viskosität der Farbe auf einfache Weise auch ohne das Vorsehen von Rühreinrichtungen eingestellt werden. Bei dem Feuchtigkeitsgehalt handelt es sich um die Sättigung des Lösungsmitteldampfes, insbesondere des Wasserdampfes.

Bei einer besonders bevorzugten Weiterbildung des erfindungsgemäßen Verfahrens erfolgt vorzugsweise ein Kühlen des zugeführten Lösungsmitteldampfes. Diese insbesondere über eine Kühlplatte erfolgende Kühlung führt dazu, dass der Lösungsmitteldampf bzw. ein Gemisch aus überschüssiger Farbe und dem Lösungsmitteldampf kondensiert. Dies bewirkt ein Einbringen des Lösungsmittels in die Farbe auf einfache Weise.

Bevorzugt ist es, dass ein Zuführen des Lösungsmitteldampfes ab Überschreiten eines vorgegebenen Viskositätswerts erfolgt. Besonders bevorzugt ist es daher, in Abhängigkeit einer gemessenen Viskosität nicht nur den Feuchtigkeitsgehalt über die Menge des eingebrachten Lösungsmitteldampfes bzw. seiner Sättigung, sondern auch die Temperatur einer Kühlung zu steuern. Hierbei ist es möglich, dass beispielsweise der Feuchtigkeitsgehalt oder die Menge des zugeführten Lösungsmitteldampfes nur stufenweise verändert werden kann, da eine feinere Regelung durch die Temperatur erfolgt.

Besonders bevorzugt ist es, zur Durchführung des erfindungsgemäßen Verfahrens die erfindungsgemäße Farbauftragvorrichtung zu verwenden.

Nachfolgend wird die Erfindung anhand bevorzugter Ausführungsformen näher erläutert.

Es zeigen:

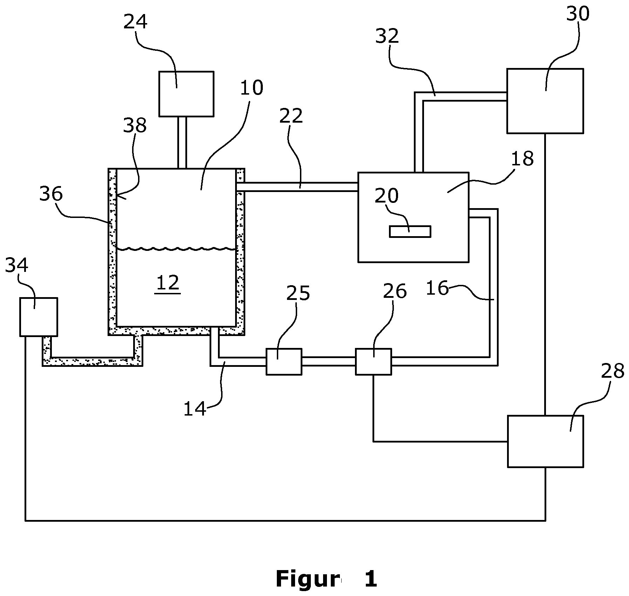

- Figur 1: zeigt eine vereinfachte schematische Darstellung einer ersten bevorzugten Ausführungsform der erfindungsgemäßen Farbauftragvorrichtung und
- Figur 2: zeigt eine vereinfachte schematische Darstellung einer zweiten bevorzugten Ausführungsform der erfindungsgemäßen Farbauftragvorrichtung.

In einem Farbreservoir 10 ist eine insbesondere wasserverdünnbare Farbe 12 bevorratet. Das Farbreservoir 10 ist über eine Leitung 14 mit einer Pumpe und diese über eine Leitung 16 mit einer Farbauftrageinrichtung 18 verbunden. Die Farbauftrageinrichtung 18 kann beispielsweise einen Sprühkopf umfassen. In der Farbauftrageinrichtung 18 ist ein zu beschichtendes Werkstück 20 oder ein durch eine Kammer der Farbauftrageinrichtung 18 hindurchgeführtes Werkstück 20 angeordnet. Überschüssige Farbe wird aus dem Bereich der Farbauftrageinrichtung 18 über eine Leitung 22 abgeführt und dem Farbreservoir 10 wieder zugeführt. Das Abführen der überschüssigen Farbe aus dem Bereich der Farbauftrageinrichtung 18 kann beispielsweise durch ein Absaugen erfolgen. Hierzu ist eine Saugeinrichtung 24 mit dem Farbreservoir 10 verbunden. Über die Saugeinrichtung 24 wird überschüssiges Material abgesaugt, wobei ggf. in einer Kammer der Farbauftrageinrichtung 18 ein gewisser Unterdruck erzeugt wird.

In der Zuführleitung 16 ist im dargestellten Ausführungsbeispiel zwischen einer Pumpe 25 und der Farbauftragseinrichtung 18 ein Viskositätsmesser 26 angeordnet. Mit dem Viskositätsmesser 26 ist eine Steuereinrichtung 28 elektrisch verbunden. Des Weiteren ist mit der Steuereinrichtung 28 eine Befeuchtungseinrichtung 30 elektrisch verbunden und insofern durch die Steuereinrichtung 28 steuerbar. Die Befeuchtungseinrichtung 30 ist im dargestellten Ausführungsbeispiel mit der Farbauftrageinrichtung 18 verbunden und dient dazu, über eine Leitung 32 Lösungsmitteldampf, insbesondere Wasserdampf, dem Bereich des Farbauftrages und insbesondere dem Bereich, in dem die überschüssige Farbe abgesaugt wird, zuzuführen. Durch die Leitung 22 wird somit ein Gemisch aus überschüssiger Farbe und Dampf dem Farbreservoir 10 zugeführt.

Des Weiteren weist die erfindungsgemäße Farbauftragvorrichtung einen Kühlkreislauf auf. Mit Hilfe einer insbesondere eine Pumpe aufweisenden Kühleinrichtung 34 kann ein Kühlmittel, wie Wasser, in einem das Farbreservoir 10 umgebenden Kühlmantel 36 bereitgestellt werden. Durch die Kühleinrichtung erfolgt ein Kühlen einer Innenwand 38 des Farbreservoirs 10. An der gekühlten Wand 38 erfolgt ein Kondensieren des durch die Leitung 22 in das Farbreservoir 10 gelangenden Gemisches aus Dampf und überschüssiger Farbe. Insbesondere der kondensierte Wasserdampf fließt an der Innenwand 38 nach unten und mischt sich somit gut mit der in dem Farbreservoir 10 vorhandenen Farbe 12, so dass die Viskosität der Farbe 12 verändert wird.

Die Kühleinrichtung 34 ist ebenfalls mit der Steuerung 28 verbunden. Zur Steuerung der erfindungsgemäßen Farbauftragvorrichtung erfolgt mit Hilfe der Steuereinrichtung somit in Abhängigkeit der gemessenen Viskosität ein Steuern der Temperatur des Kühlmittels und/ oder ein Steuern der zugeführten Dampfmenge.

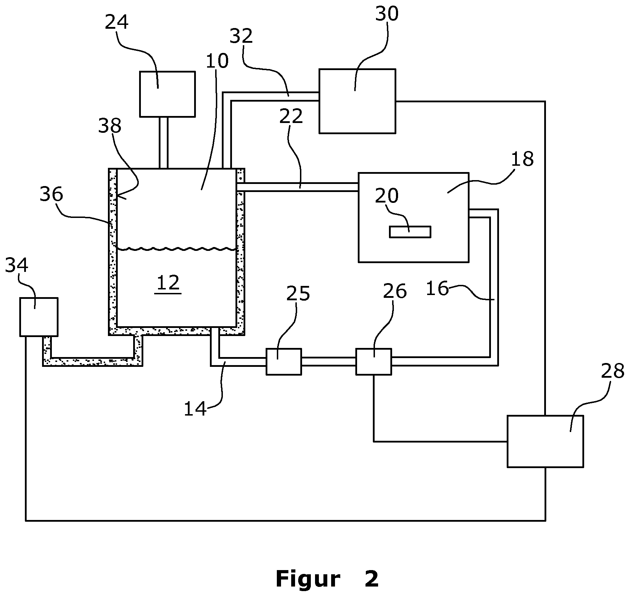

Figur 2 zeigt eine zweite bevorzugte Ausführungsform, wobei ähnliche und identische Bauteile mit denselben Bezugszeichen gekennzeichnet sind. Bei der der zweiten Ausführungsform ist die Befeuchtungseinrichtung 30 mit dem Farbreservoir 10 verbunden.

## Patentansprüche

1. Farbauftragvorrichtung, insbesondere zum Auftragen wasserverdünnbarer Farben, mit
einem Farbreservoir (10), das über eine Zuführleitung (14, 16) mit einer Farbauftrageinrichtung (18) verbunden ist,
einer Farbabführeinrichtung (24) zum Zurückführen überschüssiger Farbe aus dem Bereich der Farbauftrageinrichtung (18) in das Farbreservoir (10),
einer Befeuchtungseinrichtung (30) zum Erhöhen der Luftfeuchtigkeit im Bereich der Farbauftrageinrichtung (18) und/ oder in dem Farbreservoir (10) und
einem Viskositätsmesser (26),
**dadurch gekennzeichnet, dass**
eine mit dem Viskositätsmesser (26) und der Befeuchtungseinrichtung (30) verbundene Steuereinrichtung (28) zur Steuerung der Befeuchtungseinrichtung (30) vorgesehen ist.

2. Farbauftragvorrichtung nach Anspruch 1, **dadurch gekennzeichnet, dass** die Befeuchtungseinrichtung Lösungsmitteldampf erzeugt und in den Bereichen der Farbauftrageinrichtung (18) und/ oder dem Farbreservoir (10) einbringt.

3. Farbauftragvorrichtung nach Anspruch 1 oder 2, **dadurch gekennzeichnet, dass** der Viskositätsmesser (26) in der Zuführleitung (16) angeordnet ist.

4. Farbauftragvorrichtung nach einem der Ansprüche 1 - 3, **dadurch gekennzeichnet, dass** die Steuereinrichtung (28) den Feuchtigkeitsgehalt bzw. die zugeführte Menge des Lösungsmittels in Abhängigkeit der gemessenen Viskosität steuert.

5. Farbauftragvorrichtung nach einem der Ansprüche 1 - 4, **gekennzeichnet durch** eine in Förderrichtung der Farbauftrageinrichtung (18) nachgeordneten Kühleinrichtung (34, 36).

6. Farbauftragvorrichtung nach Anspruch 5, **dadurch gekennzeichnet, dass** die Kühleinrichtung (34, 36) eine Fläche (38), insbesondere eine Wandfläche des Farbreservoirs derart kühlt, dass der Lösungsmitteldampf an dieser kondensiert.

7. Farbauftragvorrichtung nach einem der Ansprüche 1 - 6, **dadurch gekennzeichnet, dass** die Farbabführeinrichtung eine Saugeinrichtung (24) aufweist, die vorzugsweise mit dem Farbreservoir (10) verbunden ist.

8. Verfahren zur Viskositätseinstellung einer Farbe, insbesondere für eine Farbauftragvorrichtung nach einem der Ansprüche 1 - 7, mit den Schritten:
Messen der Farbviskosität, und
Zuführen von Lösungsmitteldampf in einen Bereich, in dem die Farbe auf ein Werkstück (20) aufgetragen wird oder in dem die Farbe bereitgestellt wird,
wobei ein Feuchtigkeitsgehalt bzw. die Menge des zugeführten Lösungsmitteldampfes in Abhängigkeit von der gemessenen Viskosität eingestellt wird.

9. Verfahren nach Anspruch 8, bei welchem ein Zuführen von Lösungsmitteldampf ab Überschreiten eines vorgegebenen Viskositätswerts erfolgt.

10. Verfahren nach Anspruch 8 oder 9, bei welchem ein Kühlen des Gemisches aus zugeführtem Lösungsmitteldampf und überschüssiger Farbe erfolgt, wobei vorzugsweise durch das Kühlen ein Kondensieren hervorgerufen wird.

11. Verfahren nach einem der Ansprüche 8 - 10, bei welchem das Einstellen des Feuchtigkeitsgehalts und/ oder der Kühltemperatur in Abhängigkeit der gemessenen Viskosität erfolgt.

## Claims

1. Paint application device, in particular for the application of water-dilutable paints, comprising
a paint reservoir (10) connected with a paint application device (18) via a supply line (14, 16),
a paint discharge device (24) for returning excess paint from the area of the paint application device (18) into paint reservoir (10),
a humidification device (30) for increasing the air humidity in the area of the paint application device (18) and/or in the paint reservoir (10), and
a viscosity gage (26),
**characterized in that**
a control device (28) for controlling the humidification device (30) is provided, the control device being connected with the viscosity gage (26) and the humidification device (30).

2. Paint application device of claim 1, **characterized in that** the humidification device produces solvent vapor and introduces the same into the areas of the paint application device (18) and/or the paint reservoir (10).

3. Paint application device of claim 1 or 2, **characterized in that** the viscosity gage (26) is arranged in the supply line (16).

4. Paint application device of one of claims 1 - 3, **characterized in that** the control device (28) controls the humidity or the supplied amount of solvent in dependence on the viscosity measured.

5. Paint application device of one of claims 1 - 4, **characterized by** a cooling device (34, 36) arranged downstream of the paint application device (18) in the flow direction.

6. Paint application device of claim 5, **characterized in that** the cooling device (34, 36) cools a surface (38), in particular a wall surface of the paint reservoir, such that the solvent vapor condenses thereon.

7. Paint application device of one of claims 1 - 6, **characterized in that** the paint discharge device comprises a suctioning device (24) preferably connected with the paint reservoir (10).

8. Method for adjusting the viscosity of a paint, in particular for a paint application device of one of claims 1 - 7, comprising the following steps:
measuring the paint viscosity, and
supplying solvent vapor to an area where the paint is applied onto a work piece (20) or in which the paint is provided,
wherein the humidity or the amount of solvent vapor supplied is adjusted in dependence on the viscosity measured.

9. Method of claim 8, wherein solvent vapor is supplied from the time of exceeding a predetermined viscosity value.

10. Method of claim 8 or 9, wherein a cooling of the mixture of solvent vapor supplied and excess paint is effected, the cooling preferably causing condensation.

11. Method of one of claims 8 - 10, wherein the adjustment of the humidity and /or of the cooling temperature is made in dependence on the viscosity measured.

## Revendications

1. Dispositif d'application de peinture, destiné en particulier à l'application de peintures diluables dans l'eau, comprenant
un réservoir de peinture (10) qui est relié à un moyen d'application de peinture (18) par l'intermédiaire d'un conduit d'alimentation (14, 16),
un moyen d'évacuation de peinture (24) destiné à ramener la peinture en excès de la zone du moyen d'application de peinture (18) jusque dans le réservoir de peinture (10),
un moyen d'humidification (30) destiné à augmenter l'humidité de l'air dans la zone du moyen d'application de peinture (18) et/ou dans le réservoir de peinture (10), et
un viscosimètre (26),
**caractérisé en ce que**
un moyen de commande (28), raccordé au viscosimètre (26) et au moyen d'humidification (30), est prévu pour commander le moyen d'humidification (30).

2. Dispositif d'application de peinture selon la revendication 1, **caractérisé en ce que** le moyen d'humidification produit de la vapeur de solvant et l'introduit dans les zones du moyen d'application de peinture (18) et/ou dans le réservoir de peinture (10).

3. Dispositif d'application de peinture selon la revendication 1 ou 2, **caractérisé en ce que** le viscosimètre (26) est disposé dans le conduit d'alimentation (16).

4. Dispositif d'application de peinture selon l'une quelconque des revendications 1 à 3, **caractérisé en ce que** le moyen de commande (28) commande le taux d'humidité ou la quantité de solvant fournie en fonction de la viscosité mesurée.

5. Dispositif d'application de peinture selon l'une quelconque des revendications 1 à 4, **caractérisé par** un moyen de refroidissement (34, 36) placé en aval du moyen d'application de peinture (18) par référence à la direction de transport.

6. Dispositif d'application de peinture selon la revendication 5, **caractérisé en ce que** le moyen de refroidissement (34, 36) refroidit une surface (38), en particulier une surface de paroi du réservoir de peinture, de telle sorte que la vapeur de solvant se condense sur celle-ci.

7. Dispositif d'application de peinture selon l'une quelconque des revendications 1 à 6, **caractérisé en ce que** le moyen d'évacuation de peinture comporte un moyen d'aspiration (24) qui est relié de préférence au réservoir de peinture (10).

8. Procédé de réglage de la viscosité d'une peinture, destiné en particulier à un dispositif d'application de peinture selon l'une quelconque des revendications 1 à 7, comprenant les étapes consistant à :
mesurer la viscosité de la peinture, et
amener de la vapeur de solvant dans une zone dans laquelle la peinture est appliquée sur une pièce (20) ou dans laquelle la peinture est fournie,
la teneur en humidité ou la quantité de vapeur de solvant amenée est réglée en fonction de la viscosité mesurée.

9. Procédé selon la revendication 8, dans lequel la vapeur de solvant est amenée lorsqu'une valeur de viscosité prédéterminée est dépassée.

10. Procédé selon la revendication 8 ou 9, dans lequel le mélange constitué de la vapeur de solvant et de la peinture en excès est refroidi, le refroidissement étant effectué de préférence par condensation.

11. Procédé selon l'une quelconque des revendications 8 à 10, dans lequel le réglage de la teneur en humidité et/ou la température de refroidissement est effectué en fonction de la viscosité mesurée.
